# EUROPEAN PATENT APPLICATION

(11) **EP 1 724 541 A1**
(43) Date of publication of application: **22.11.2006**
(21) Application number: 05445035.8
(22) Date of filing: 18.05.2005
(51) Int. Cl.: F25D 29/00, F25D 23/02, F25D 17/04, F25D 25/02, G06K 19/077

(54) **Food temperature setting using RFID technology**

(71) Applicant: Electrolux Home Products Corporation N.V., 1930 Zaventem (BE)
(72) Inventor: Bertolaccini, Andrea, 50053 Cerreto Guidi (FI) (IT); Zuccolo, Stefano, 330077 Sacile (PN) (IT); Farrell, Michael, 90409 Nürnberg (DE)
(74) Representative: Svahn, Göran

(57) **Abstract**

The present invention relates to an appliance 10 having a storage compartment 11 with an opening 17 for access into the compartment 10. A cover 18 is being arranged for covering the opening 17 in order to enclose the compartment 11. The apparatus further comprising a climate control system being provided to control the climate inside the compartment 11, the system comprising a control unit 20 for control and adjustment of climate parameters of the compartment 11. The system further comprises means 21,22 to detect the parameters.

Furthermore, the system comprises a user interface 23 enabling the user to determine the operation of the system. The user interface is being arranged on the cover 18 and comprises a limited number of functions 25-29 for the determination. Each of the functions 25-29 corresponds to a defined set of values of the climate parameters.

## Description

### TECHNICAL FIELD

The present invention relates to an appliance having a storage compartment with an opening for access into the compartment. A cover is being arranged for covering the opening in order to enclose the compartment. The apparatus further comprising a climate control system being provided to control the climate inside the compartment, the system comprising a control unit for control and adjustment of climate parameters of the compartment. The system further comprises means to detect the parameters.

### BACKGROUND

Systems to control the climate inside a compartment are well known. For instance in the area of cooling cabinets, for instance refrigerators or freezers, the cabinet comprises at least one compartment for which the temperature needs to be controlled. Most common is to control the temperature, but it might also happen that other climate parameters, such as air humidity, is controlled.

US patent US6170276 from Maytag Corporation discloses a cooling cabinet wherein the cabinet comprises some compartment in which the climate is controlled. As shown there is at least one compartment 30 where the climate is specifically controlled. A climate device, indicated with a fan 71 and inlet/outlet 76/77, makes the adjustment of the climate parameters based on information from a control unit 58. The control system further comprises means, such as temperature and humidity sensors connected to the control unit, to detect the climate inside the compartment.

As mentioned is said patent there is a great need by consumers to store fruit and vegetables or other provisions in a separate storage compartment in order to be able to provide the most sufficient storage climate for this specific provisions. The compartment therefore comprises means to provide such a wishful storage. For instance should the walls be isolated from the rest of the compartment and the control system needs to be sufficient enough to enable the climate control.

One problem with the disclosed solution by Maytag and many other solutions is that the control unit is very complex to handle. The user is in most cases not aware of the proper settings for specific provisions and will have problems to handle the buttons of the disclosed user interface. Another problem is that the user interface is arranged in a very inconvenient position. It is difficult for the user to be able to bend down and try to read and understand the user interface when it is positioned like that at a small unit next to the drawer cover. Moreover, one problem with the Maytag solution in that the user interface demands space, which results in a decreased volume for the provisions compartment.

Therefore an object of the present invention is to provide a more consumer innovative solution, meaning a solution that understands the needs of the user. Moreover, an object of the present invention is to provide a solution that is cheaper and easier to industrialize.

### SUMMARY OF THE PRESENT INVENTION

The present invention relates to an appliance having a storage compartment with a opening for access into the compartment. A cover is being arranged for covering the opening in order to enclose the compartment. The apparatus further comprising a climate control system being provided to control the climate inside the compartment, the system comprising a control unit for control and adjustment of climate parameters of the compartment. The system further comprises means to detect the parameters.

Furthermore, the system comprises a user interface enabling the user to determine the operation of the system. The user interface is being arranged on the cover and comprises a limited number of functions for the determination. Each of the functions corresponds to a defined set of values of the climate parameters.

### DESCRIPTION OF THE DRAWINGS

The invention will now be described further with reference to the accompanying drawings, in which:
Fig. 1 shows a front perspective view of a cooling cabinet in which a compartment with a climate control system is integrated.
Fig. 2 shows a front perspective view of the compartment according to fig. 1 in which the climate control system is further illustrated.
Fig. 3 shows a front perspective view of the cover of the compartment according to fig. 1 - 2 in which the user interface is further illustrated.
Fig. 4 shows in a front view the user interface of fig. 3 in a more detailed view.
Fig. 5 shows a front perspective view of the determination mechanism of the user interface.

### DESCRIPTION OF ILLUSTRATIVE EMBODIMENTS

The figures show an illustrative embodiment of an appliance with a compartment having a climate control system in accordance with the invention. The illustrative embodiment shall not be interpreted as a limitation of the invention. Its purpose is to illustrate how the invention can be applied and to further illustrate the scope of the invention.

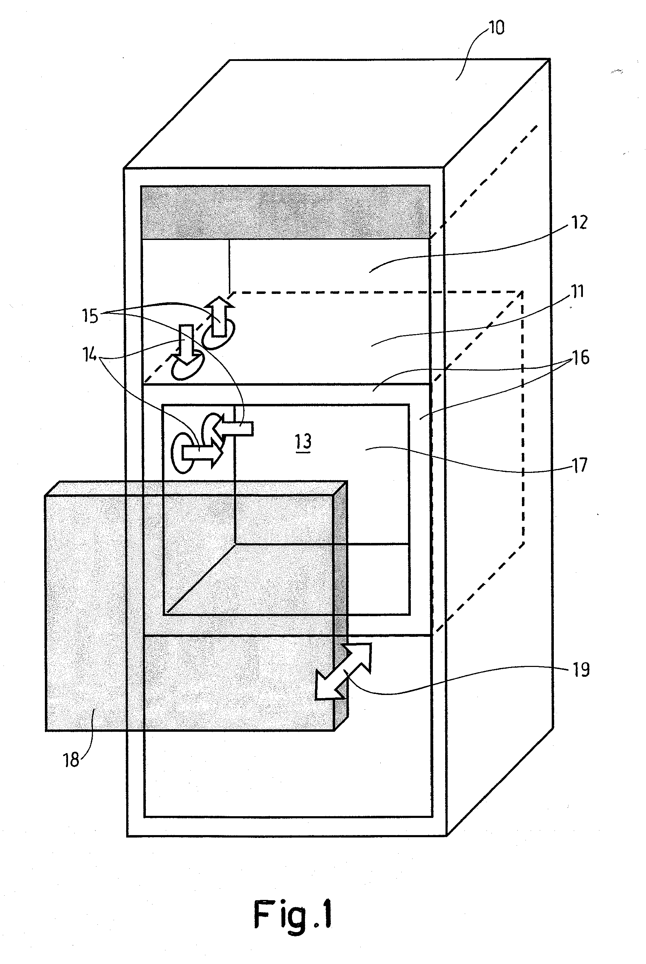

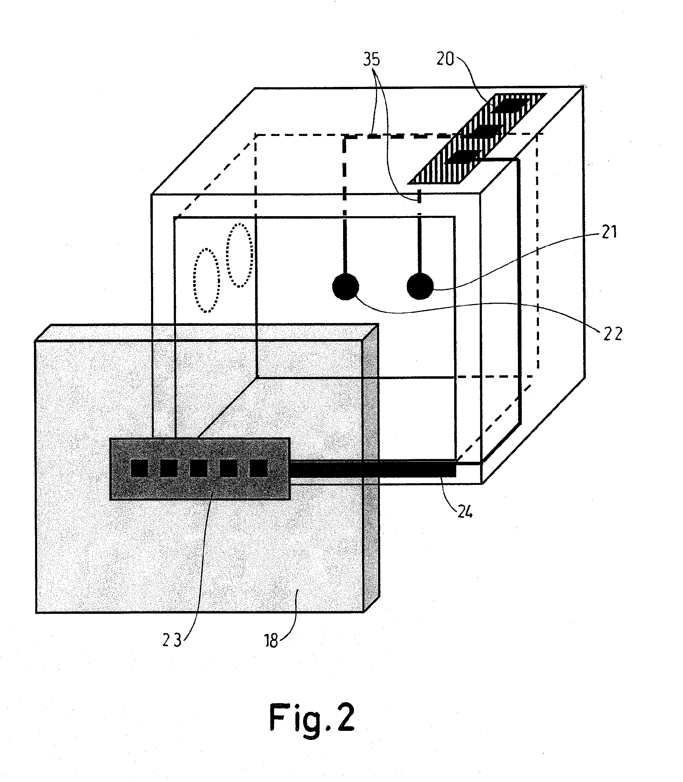

Fig. 1 shows a front perspective view of a cooling cabinet 10 in which a compartment 11 with a climate control system is integrated. The figure only illustrates the basic concepts of the technical field, which is climate-controlled compartment. This means that the person skilled in the art should not read the specification and the accompanying drawings as a strict limitation of the scope of the invention, which in fact relates to the features of the climate control system, see fig. 2 - 5.

Fig. 1 illustrates how the cooling cabinet 10, having a regular cooling system of some kind, and the compartment 11 could cooperate. In this embodiment it is illustrated that air is provided to flow between the cooling compartment 12 of the cooling cabinet and the inside 13 of the compartment. The flow is illustrated with arrows, flow from the compartment 12 to the inside 13 by arrows 14 and flow from the inside to the compartment 12 by arrows 15. A climate device such as this is, as part of the climate control system, enables the airflow. Such as device preferably comprises at least one fan and/or a damper (not shown). Moreover, in order to adjust humidity, means enabling the adjustment of humidity could be included. Since the features of the climate device is not essential, the device will not be further described. Is should moreover be understood that the climate device as an alternative could comprise a separate cooling system, such as by compressor or by Peltier element operated. This means that the compartment does not have to be arranged into a cooling cabinet as disclosed in the present embodiment.

The compartment 11 comprises surrounding walls 16 and an opening 17. Moreover, a cover 18 is arranged for covering the opening in order to enclose the compartment. The cover of the illustrative embodiment is preferably part of a receptacle that is slidably mounted at the compartment, in order to be able to slide as a drawer in and out of the compartment. The complete receptacle is not shown in the drawings, since it is not essential for the present invention and since it is part of common knowledge. Arrow 19 illustrates how the cover of the illustrative embodiment can move during use. As an alternative the cover could be a door or lid hinged at the compartment. This means that the cover design is not essential for the present invention.

Fig. 2 shows a front perspective view of the compartment 11 in which the climate control system is further illustrated. The surrounding walls 16 and the cover 17 are shown. Moreover, the climate control system is shown. The task for this system is to control the climate parameters, such as temperature and air humidity, inside the compartment. In order to enable this operation, the system comprises some parts. At first there is a control unit 20 preferable as a PCB board with a microcomputer. The control unit could be separate and unique for this compartment or part of a larger control system for more compartments and/or the whole cooling cabinet.

The control unit 20 is connected to sensors or probes, in the illustrative embodiment one temperature sensor 21 and one air humidity sensor 22. These provide information to the control unit about the values of the climate parameters inside the compartment 11. They are for instance connected to the control unit by wire connections 35 or wireless. The compartment further comprises a user interface 23 mounted on the cover 18 and an antenna 24 mounted at the lower part of the compartment. The antenna could as an alternative be arranged at the top of the compartment or somewhere else preferable for the operations of the compartment or the whole cabinet.

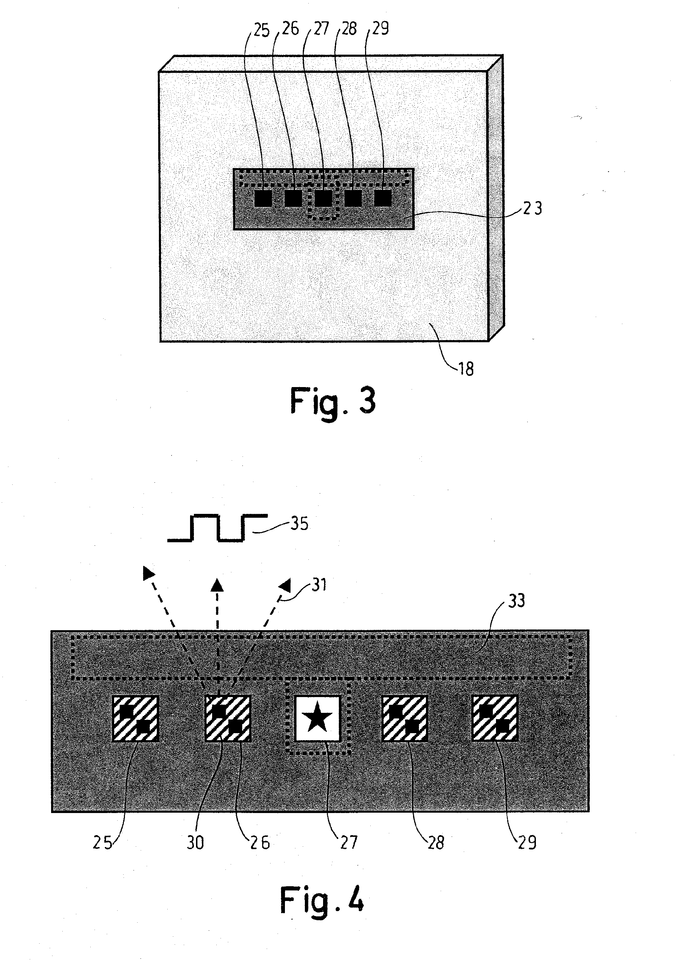

The user interface is the most essential part of the present invention and will therefore be described in detail in relation to fig. 3 - 5.

Fig. 3 shows a front perspective view of the cover 18 of the compartment in which the user interface is further illustrated, while fig. 4 shows in a front view the user interface in a more detailed view. The main idea having a user interface for this kind of climate control system is to enable for the user to determine the operation of the system. This means that the user can set the values of the climate parameters. For instance, if the user wishes to have a setting of 2 degree Celsius temperature and 70% air humidity inside the compartment 11 he/she determines the values on the interface and the control system will make sure to adjust the climate inside the compartment to enable the determined parameter values. As mentioned above one of the problems with many now common user interfaces is that they are difficult for the user to handle. The user interface of the present invention intends to solve this problem.

As shown in fig. 3 - 4 of the illustrative embodiment, the user interface is provided with five functions, illustrated by numbers 25 - 29, for user determination. Each of these functions corresponds to a defined setting of values for the climate parameters. For instance one function 25 corresponds to a setting of 2 degree Celsius temperature and 70% air humidity. Another function 29 for instance corresponds to a setting of 0 degree Celsius temperature and 50% air humidity. This means that the user does not need to know the actual settings. Instead he/she selects one of five functions and the climate control system does the rest. In order to communicate to the user what provisions the settings of a specific function relates to, each function has a symbol (printed or electronically displayed). The star of function 27 illustrates such a symbol. Preferably, the picture of specific provisions, such as a vegetable, is shown (see fig. 4).

As mentioned above, another problem with commonly known user interfaces in this technical field is that they are often small and positioned at the side of the cover. This often means that the interface has to be small and difficult to see and read. In order to avoid this the user interface 23 of the present invention is arranged on the cover 18. This means that it can be larger and easier to handle. In order to provide a convenient technical solution to enable the user interface to be positioned on a movable part such as the cover, the present invention proposes an arrangement as described below.

A newly introduced technology for radio frequency communication is Radio Frequency Identifiers, RFID. These small electronic circuits does not need any energy supply and can transmit a digital code to identify itself. Depending on the frequency in which the RFID works it can transmit more or less complex signals. In order to be able to transmit signals, the RFID also comprises some kind of antenna, such as a coil, which can receive magnetic or electrical field signals and use these to energize the RFID and thereby be able to transmit the digital code. In the future it is also expected that the energy RFID receives can be user to do more than transmit a digital code.

RFID is a very convenient technique to use in the present invention. The basic principle is to arrange one unique RFID 25 - 29 at each function symbol of the cover. Each unique RFID has its own digital code. In fig. 4 one of the functions, 26, is illustrated with an RFID 30. The arrows 31 illustrate the radio frequency signal sent out when the RFID is energized while the symbol 35 illustrates the digital code carried by the frequency sent.

### Wireless with other sensors:

*1.Hall sensors. Add before 12 months.*
*2. Maybe something else*

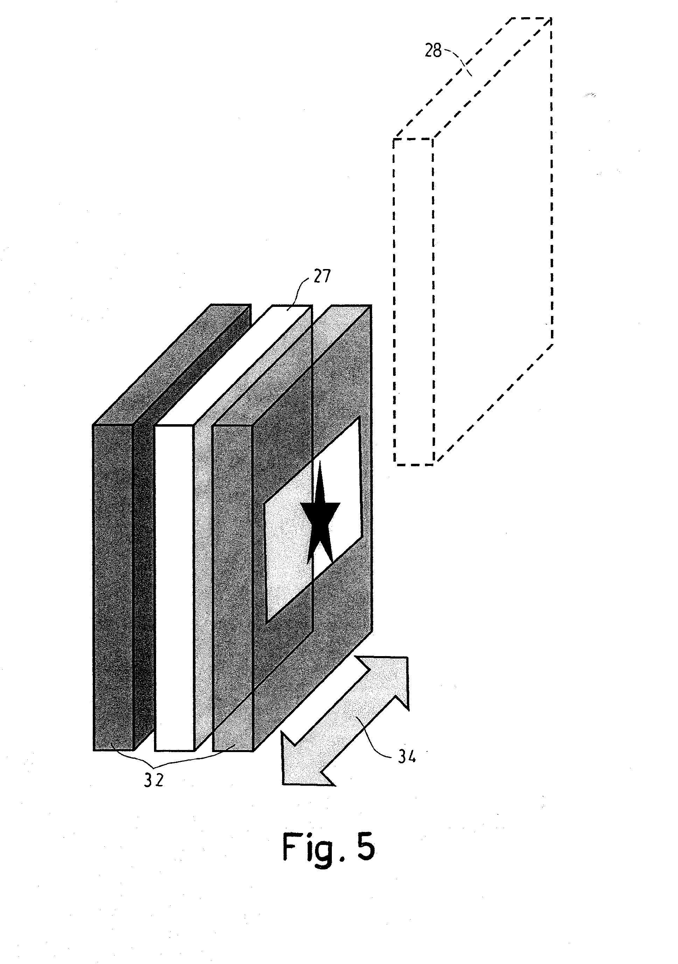

The idea is that the climate control system uses the antenna 24, see fig. 2, both to energize the RFID:s and to receive the radio frequency signals transmitted back. It will therefore either "see" the RFID continuously or on regular basis ask for (shake hand) with the RFID circuits by energizing them. Having the communication, it will be possible to communicate the function selected by the user to the control unit. The present invention uses shielding to enable this, as illustrated in fig. 5.

Fig. 5 shows a front perspective view of the principle idea for the user interface of the illustrative embodiment. In the figure, two RFID:s 27 and 28 out of five is shown, one of them 28 shown by dotted line. The user interface further comprises a mechanism with a moving part 32 being able to indicate the function 25 - 29 determined by the user. The figure also shows the symbol (the star) of number 27 function. The mechanism of the embodiment comprises a sliding frame 33, see fig. 4, which supports the moving part. Of course a rotating or any other mechanism can be used instead to enable to same function. The position of the moving part can by indicated in many ways, which is why the illustrative embodiment does not describe any particular indication. One way could be to have a frame indicating the symbol selected. Another way could be to energize light means on the RFID lightning up or change color of the symbol selected.

The idea with a moving part 32 is that when it is positioned at an RFID, the signals to and from this RFID will be shielded off. This means that the climate control system will no "see" this RFID. Still it sees the other four RFID:s. This means that the system will easily determine which function the user has selected and activate the adjustments needed to change the climate in accordance with the function. The arrow 34 illustrates the sliding function.

There are obvious advantages to have a wireless connection between the user interface 23 and the control unit 20, especially if the user interface is positioned on a moving part, such as the cover. Having a wire connection will cause mechanical stress on wires. Moreover, the user will not be able to, in a convenient way, to remove the drawer from the compartment and clean it. Having a mainly mechanical solution also means that it will be easier to last the lifetime of the compartment.

It should be obvious by a person skilled in the art that the proposal of using RFID, or the mechanical solution proposed, should not be read as a limitation of the scope of the invention. The scope is that the user interface is arranged on the cover 19 and that it comprises a limited number of functions (25-29) for the users determination of the systems operation.

## Claims

1. An appliance (10) having a storage compartment (11) with an opening (17) for access into the compartment (11), a cover (18) being arranged for covering the opening (17) in order to enclose the compartment (11), a climate control system being provided to control the climate inside the compartment (11), the system comprising a control unit (20) for control and adjustment of climate parameters of the compartment (11), the system further comprising means (21.22) to detect the parameters and a climate device (14,15) enabling the adjustment **characterized in**
**that** the system comprises a user interface (23) enabling the user to determine the operation of the system, the user interface being arranged on the cover (18) and comprising a limited number of functions (25-29) for the determination, each of the functions (25-29) corresponds to a defined set of values of the climate parameters.

2. An appliance according to any of the preceding claims wherein the cover (18) consists in a door being attached by hinges to the appliance (10).

3. An appliance according to claim 1 wherein the cover (18) being part of a receptacle being slidably mounted at the compartment (11) for movement between an open position enabling access to the compartment (11) and a closed position enclosing the compartment (11).

4. An appliance according to any of the preceding claims wherein the control unit (20) comprises a microcomputer for enabling the control and processing the adjustments of the climate parameters based on the determination of the operation of the system.

5. An appliance according to any of the preceding claims wherein the detections means comprises sensors (21,22) to detect climate parameters such as temperature and/or air humidity.

6. An appliance according to any of the preceding claims wherein the appliance consist in a refrigerator and/or freezer, the climate system comprising means to introduce a flow of cooling air (14,15) from the appliance in order to enable the adjustment of the climate parameters.

7. An appliance according to any of the preceding claims wherein the user interface (23) comprises a mechanism (33) having a movable part (32) being able to move to indicate the function (25-29) determined.

8. An appliance according to any of the preceding claims wherein each of said functions (25-29) being illustrated by a graphic symbol arranged at the user interface (23), the symbol for instance being created electronically or printed.

9. An appliance according to any of the preceding claims wherein the user interface (23) communicates with the control system via radio frequency signals (31).

10. An appliance according to any of the preceding claims wherein information about the function determined is communicated to the control unit by an electronic circuit (25-29,30) being able to transmit radio frequency signals, the electronic circuit being arranged at the user interface (23).

11. An appliance according to claim 10 wherein the electronic circuit (25-29), when being powered by the control unit (20), transmits a radio frequency signal (31) carrying a digital code (35) to be received by the control unit (20), the circuit being powered by an electric and/or magnetic field.

12. An appliance according to any of the claims 10 - 11 wherein each function corresponds to a separate electronic circuit (25-29) in that each circuit being able to transmit a unique digital code (35) via a radio frequency signals (31), wherein the control unit (20) detects the determined function based on the received digital codes (35).

13. An appliance according to claim 12 wherein the control unit during operation detects the determined function (25-29) based on the digital codes (35) received.

14. An appliance according to any of the claims 12 - 13 wherein each function corresponds to a graphic symbol arranged at the user interface (23) and in that a separate electronic circuit (25-29) is arranged at the vicinity of each graphic symbol.

15. An appliance according to claim 14 wherein the determination of function is enabled by a mechanism having a movable (32) part being able to move to indicate the function determined, the mechanism further comprises shielding means (32) to control the communication between the control unit and each of said electronic circuits (25-29).

16. An appliance according to claim 15 wherein said shielding means (32) shields of radio frequency signals (31) from at least one of said electronic circuits (25-29) to be received by the control unit (20).

17. An appliance according to claim 16 wherein the shielding means (32) at operation shields radio frequency signals (31) from the separate electronic circuit (25-29) which is arranged at the vicinity of the graphical symbol that corresponds to the manually determined function.

18. An appliance according to any of the claims 10 - 17 wherein the radio frequency signals (31) are received by the control unit (20) via an antenna (24).

19. An appliance according to claim 18 wherein the antenna (24) transmits signals being received by the electronic circuits (25-29).
